# EUROPEAN PATENT APPLICATION

(11) **EP 4 414 943 A1**
(43) Date of publication of application: **14.08.2024**
(21) Application number: 24155709.9
(22) Date of filing: 05.02.2024
(51) Int. Cl.: G06V 10/147, G06V 20/52, G06V 20/62, G06V 10/24

(54) **METHOD FOR DETECTING THE POINTING OF A DIGITAL IMAGING DEVICE FOR RECOGNIZING VEHICLE LICENSE PLATES**

(30) Priority: 08.02.2023 IT 202300002133
(71) Applicant: MOVYON S.p.A., 00159 Roma (IT)
(72) Inventor: FABBRIZI, Emanuele, 50041 Calenzano (FI) (IT); MODICA, Daniele, 00159 ROMA (IT); NOVELLI, Teresa, 00159 ROMA (IT)
(74) Representative: Pietra, Giulia

(57) **Abstract**

It is disclosed a method for detecting the pointing of a digital imaging device for recognizing vehicle license plates. The method comprises receiving a plurality of digital images of a plurality of passing vehicles provided by the digital imaging device; for each received digital image, determining an in-formation indicative of the position of a license plate within the received digital image, so as to obtain a plurality of information indicative of license plate positions in the plurality of received digital images; based on the plurality of information indicative of license plate positions in the plurality of received digital images, determining a statistical distribution of license plate positions in a field of view of the digital imaging device; and detecting the pointing of the digital imaging device based on the statistical distribution of the license plate positions in the field of view of the digital imaging device.

## Description

### Technical field

The present invention relates in general to the field of traffic control methods and systems. In particular, the present invention relates to a method for detecting the pointing of a digital imaging device for recognizing vehicle license plates. The present invention also relates to a traffic control system comprising a digital imaging device for recognizing vehicle license plates and a data processing unit configured to detect the pointing thereof.

### Background art

As known, in traffic control systems such as, for example, electronic toll payment systems or systems for controlling access to limited traffic areas or to car parks, digital imaging devices are used (for example cameras, digital cameras or digital video cameras) for recognizing vehicle license plates. Such devices provide one or more digital images of each passing vehicle. The digital image(s) relative to each vehicle undergo image processing techniques (for example OCR, namely *Optical Character Recognition*)*,* which identify the image portion corresponding to the license plate and recognize the alphanumeric characters present therein, thus automatically reading the license plate number.

In order for the above-mentioned image processing techniques to function correctly, it is desirable for the digital imaging device to have a pointing system that is as accurate as possible, namely its field of view should be as far as possible centered around the vehicle license plate, so that the latter is positioned as far as possible in the center of the acquired image.

When a traffic control system comprises a limited number of digital imaging devices concentrated in a circumscribed geographical area, the pointing of each device can be manually verified by an operator. The latter can physically go to the place where the device is installed, check the pointing thereof and, if necessary, manually adjust it by modifying the orientation of the device.

When, on the other hand, the traffic control system comprises many digital imaging devices distributed over a wide geographical area (for example, thousands of devices distributed along a national motorway network), manual verification of the pointing of each device becomes substantially unfeasible. For this type of scenario, automatic pointing verification techniques are known, based substantially on an analysis of the license plate number reading performances (for example, in terms of percentage of the license plate numbers correctly read with respect to the number of license plate numbers read overall). According to these known techniques, for example, if it is detected that the reading performance of a device drops below a certain threshold, it is concluded that the device could have a pointing problem, and therefore an operator is sent out to check the pointing and, if necessary, manually adjust it by modifying the orientation of the device.

### Summary of the invention

The Applicant has noticed that this known technique has some drawbacks.

Poor reading performances could indeed be due to other factors that have nothing to do with the pointing of the device. For example, the reading performance of the device could deteriorate if a particular incidence of heavy traffic with worn license plates accidentally occurs, or due to dazzling of the device when it has a certain orientation relative to the sun (for example at sunrise or sunset), or in the case of significant atmospheric events such as, for example, snow that accumulates on the license plates and prevents the reading thereof. This known technique for automatically verifying the pointing of digital imaging devices can therefore be unreliable.

An object of the present invention is to provide a method for detecting the pointing of a digital imaging device for recognizing vehicle license plates which solves the above problems.

In particular, an object of the present invention is to provide a method for detecting the pointing of a digital imaging device for recognizing vehicle license plates that is applicable also when the traffic control system comprises a large number of devices, and which at the same time is reliable.

According to embodiments of the present invention, this problem is solved by a method which provides for receiving a plurality of digital images of a plurality of passing vehicles provided by the device whose pointing is to be detected; determining, for each received digital image, an information indicative of the position of the license plate within the image, thus obtaining a plurality of information indicative of the positions of the license plates in the respective images; based on these, determining a statistical distribution of the license plate positions in the field of view of the device; and determining the pointing of the device based on said statistical distribution.

Advantageously, the method for detecting the pointing of a digital imaging device for recognizing vehicle license plates according to embodiments of the present invention allows the pointing to be detected automatically. Determination of the plurality of information indicative of the license plate positions in the plurality of digital images acquired by the device, and likewise the processing thereof to determine their statistical distribution in the field of view of the device, are operations that can be implemented by a software which, in carrying them out, is thus able to automatically detect the pointing of the device.

Moreover, these operations do not require an excessive computational load, and can therefore be performed for a large number of devices (thousands) by the computers commonly used in traffic control centers. The method is therefore advantageously applicable to traffic control systems comprising many digital imaging devices.

The method according to embodiments of the present invention is also reliable. The method is indeed based on the information indicative of the license plate positions in a plurality of images relative to different passing vehicles, and not on the image or images relative to one single vehicle. Said different vehicles can have different sizes and can be in different positions along the carriageway when their digital image is acquired by the device. Furthermore, several images are typically acquired for the same vehicle, so that in the various images the vehicle is in different positions along the carriageway. This means that, for a same orientation of the device, the license plate position in the field of view of the vehicle is subject to a certain variability, which makes detection of the pointing of the device by analyzing one single image or one single vehicle completely unreliable. However, considering a large number of vehicles (preferably higher than 30, more preferably higher than 50), this variability is averaged, and the information acquired becomes statistically relevant, hence their distribution becomes substantially indicative of the pointing of the device. For example, the plurality of considered digital images can correspond to the set of all the digital images acquired by the device during an observation period, for example a few hours or a whole day (24 hours). In the case of a camera positioned along a motorway section, for example, an observation period of 24 hours can provide the digital images of several thousands of passing vehicles. Said number advantageously guarantees the statistical relevance of the information used to detect the pointing of the device, and therefore the reliability of the detection.

Moreover, detection of the pointing is based directly on the license plate positions in the digital images acquired, and not indirectly on other data (for example, the license plate reading performances), which could also be affected by other phenomena that have nothing to do with the pointing of the digital imaging device. Also for this reason, the method according to embodiments of the present invention is particularly reliable.

The method is also advantageously capable of detecting the occurrence of pointing problems substantially in real time, well before they worsen to the point of entailing a deterioration in the license plate reading performances. For example, if the digital imaging device is knocked and slightly rotated, the detection method of the present invention is capable of detecting the pointing variation after only a few vehicles have passed, even when the variation is so slight that it does not (yet) have any detectable impact on the license plate reading performances.

According to a first aspect, a method is provided for detecting the pointing of a digital imaging device for recognizing vehicle license plates, the method comprising:
(a) receiving a plurality of digital images of a plurality of passing vehicles provided by the digital imaging device;
(b) for each received digital image, determining an information indicative of the license plate position within the received digital image, thus obtaining a plurality of information indicative of the license plate positions in the plurality of received digital images;
(c) based on the plurality of information indicative of the license plate positions in the plurality of received digital images, determining a statistical distribution of the license plate positions in a field of view of the digital imaging device; and
(d) detecting the pointing of the digital imaging device based on the statistical distribution of the license plate positions in the field of view of the digital imaging device.

Preferably, the plurality of digital images received at step a) is part of the set of digital images acquired by the digital imaging device during an observation period having a predefined duration T.

Preferably, the plurality of digital images received at step a) comprises at least 30 digital images provided by the digital imaging device.

Preferably, at step b) the information indicative of the position of a license plate within the received digital image is an information indicative of a two-dimensional position of a license plate within the received digital image, and the plurality of information indicative of license plate positions in the plurality of received digital images is a plurality of information indicative of license plate two-dimensional positions in the plurality of received digital images; and at step c) the statistical distribution of license plate positions in a field of view (100) of the digital imaging device is a statistical distribution of two-dimensional license plate positions in a field of view of the digital imaging device.

Providing the statistical distribution of the two-dimensional license plate positions in the field of view of the digital imaging device is advantageous in that it allows detecting (and then correcting) the pointing of a digital imaging device in two dimensions, namely along the X axis (substantially horizontal) and the Y axis (substantially vertical). Further, while the statistical distribution along the X axis mainly provides information about the pointing of the digital imaging device along the X axis, the statistical distribution along the Y axis advantageously provides information also relating to other aspects of the operation of the digital imaging device. Specifically, the digital imaging device is typically provided with a trigger system, which detects the passing of each vehicle and activates the acquisition of a sequence of images. If the trigger system is correctly synchronized, the vehicles will be mostly in the central part of the acquired images along the Y axis, leading to a statistical distribution which, along the Y axis, exhibits a peak substantially coinciding with the center of the field of view. Otherwise, if the trigger system is behind the correct synchronism, the vehicles will be mostly in the higher part of the acquired images, leading to a statistical distribution which, along the Y axis, exhibits a peak in the higher part of the field of view. Conversely, if the trigger system is ahead the correct synchronism, the vehicles will be mostly in the lower part of the images, leading to a statistical distribution which, along the Y axis, exhibits a peak in the lower part of the field of view. The shape of the statistical distribution along the Y axis (e.g. the position of its peak along the Y axis) therefore advantageously provides information about the synchronism of the digital imaging device, which may be accordingly adjusted if needed.

Preferably, at step b) the information indicative of the license plate position within the received digital image comprises the Cartesian coordinates of at least one pixel that represents at least one point of the license plate in the received digital image.

For example, the at least one pixel representing at least one point of the license plate in the received digital image can be a pixel that represents the centroid of the license plate in the received digital image.

Step c) can comprise dividing the field of view of the digital imaging device into a matrix of NxM areas and, for each area, determining the number of digital images in which the license plate position, as indicated by the information indicative of a license plate position within the digital image determined at step b), falls within the area.

Alternatively or additionally, step c) can comprise dividing each dimension of the field of view of the digital imaging device into a number of intervals and, for each interval, determining the number of digital images in which the license plate position in that dimension, as indicated by the information indicative of a license plate position within the digital image determined at step b), falls within the interval.

Step d) can comprise comparing the statistical distribution of the license plate positions in the field of view of the digital imaging device with a reference area of the field of view, and determining that the pointing of the digital imaging device is correct if the statistical distribution has a maximum that falls within the reference area.

Preferably, the reference area is a central area of the field of view.

Alternatively or additionally, step d) can comprise comparing the statistical distribution of the license plate positions in the field of view of the digital imaging device with at least one reference statistical distribution of the license plate positions in the field of view of the digital imaging device, and determining that the pointing of the digital imaging device is correct if the statistical distribution of the license plate positions in the field of view of the digital imaging device falls within a reference mask defined by the at least one reference statistical distribution.

Preferably, the method also comprises generating at least one alarm, if at step d) it is detected that the pointing of the digital imaging device is not correct.

Optionally, the method also comprises, if at step d) it is detected that the pointing of the digital imaging device is not correct, generating at least one correction parameter of the pointing of the digital imaging device.

Preferably, the method comprises determining a percentage of digital images provided by the digital imaging device at step a) from which a license plate number was read, and performing steps b)-d) if said percentage is above a predetermined threshold.

Optionally, the method comprises also one or more of the following steps:
- determining a statistical distribution of the license plate areas in the plurality of digital images received at step a);
- determining the time trend of the average brightness of the plurality of digital images received at step a);
- determining a statistical distribution of the number of digital images provided by the digital imaging device at step a) for a same vehicle, from which the license plate number has been read; and
- determining the percentage of digital images provided by the digital imaging device at step a) in which a license plate has been identified but no license plate number has been read, and/or the percentage of digital images provided by the digital imaging device at step a) in which no license plate has been identified.

According to a second aspect, a traffic control system is provided comprising a digital imaging device for recognizing vehicle license plates and a data processing unit connected to the digital imaging device and configured to:
(a) receive a plurality of digital images of a plurality of passing vehicles provided by the digital imaging device;
(b) for each received digital image, determine an information indicative of a license plate position within the received digital image, thus obtaining a plurality of information indicative of the license plate positions in the plurality of received digital images;
(c) based on the plurality of information indicative of the license plate positions in the plurality of received digital images, determine a statistical distribution of the license plate positions in a field of view of the digital imaging device; and
(d) detect the pointing of the digital imaging device based on the statistical distribution of the license plate positions in the field of view of the digital imaging device.

### Brief description of the drawings

The present invention will be clearer from the following detailed description, provided by way of non-limiting example, to be read with reference to the attached drawings in which:
- Figure 1 schematically shows a traffic control system comprising a digital imaging device for recognizing vehicle license plates and a data processing unit configured to implement the method according to embodiments of the present invention;
- Figure 2 is a flow chart of the method for detecting the pointing of a digital imaging device for recognizing vehicle license plates, according to an embodiment of the present invention;
- Figures 3 and 4 are two exemplary graphs that show statistical distributions of the license plate positions in the field of view of the digital imaging device of Figure 1;
- Figures 5 and 6 are two exemplary graphs that show determination of the pointing based on the statistical distributions shown in the graphs of Figures 3 and 4 respectively;
- Figures 7-10 show other example graphs that can be provided by a data processing unit configured to perform the method according to embodiments of the present invention; and
- Figures 11a-11b show a flow chart of the operation of a data processing unit configured to perform the method according to embodiments of the present invention.

### Detailed description of preferred embodiments of the invention

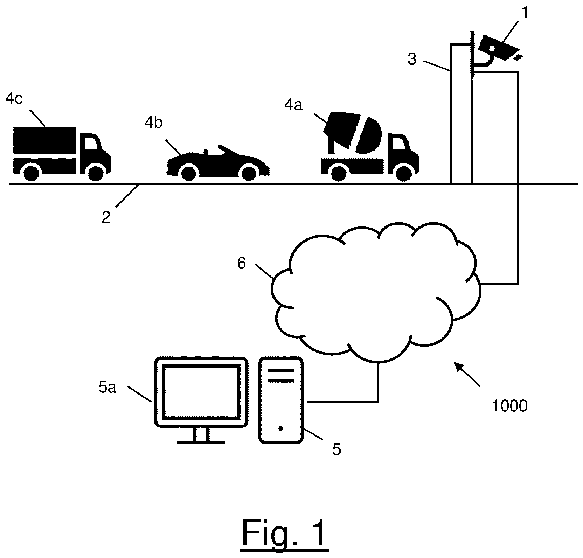

Figure 1 schematically shows a traffic control system 1000 suitable for implementing the method for detecting the pointing of a digital imaging device for recognizing vehicle license plates according to embodiments of the present invention.

The traffic control system 1000 (for example, a video toll payment system) comprises a plurality of digital imaging devices, including the digital imaging device 1 shown in Figure 1. The digital imaging device can be a camera (RGB or infrared) 1. The camera 1 can be positioned along a stretch of motorway 2 above one of its carriageways, for example fixed to a bridge 3 that passes over the stretch of motorway 2, so as to acquire at least one digital image of each vehicle passing along the carriageway. By way of example, Figure 1 shows three vehicles 4a, 4b, 4c passing along the same carriageway of the stretch of motorway 2. The camera 1 is preferably provided with a trigger system (not shown in Figure 1), which is capable of detecting the passing of each vehicle and activating the acquisition of a sequence of images relative to said vehicle, while it crosses the field of view of the camera 1. The camera 1 is also preferably provided with a processor (not shown in Figure 1) configured to process the acquired images using image processing techniques, which identify the portion of each image corresponding to the vehicle license plate and read the license plate number therefrom. The processor can be integrated in the camera 1, or can be external to the camera 1 and connected to it by means of a wired, radio or mixed connection. In the case of several images relative to the same vehicle, the camera 1 attempts a reading of the license plate number on each of them. Ideally, the obtained result should be the same for all the images that show the same vehicle.

The above scenario is not limiting, since the digital imaging device could be a camera, or an RGB or infrared digital video camera. Furthermore, the traffic control system 100 is not necessarily a video toll payment system, it could be any traffic control system (for example a system for controlling access to a limited traffic zone or a car park, or a system for controlling average vehicle speed along a stretch of road).

Referring back to Figure 1, the traffic control system 100 preferably also comprises a data processing unit 5 connected to the camera 1. The connection between camera 1 and data processing unit 5 can be a fixed, mobile or mixed (mobile and fixed) connection. Furthermore, the data processing unit 5 can be located in the vicinity of the camera 1 or in a remote position relative to the camera. For example, the data processing unit 5 can be a central server to which different cameras of the traffic control system 1000 are connected. By way of non-limiting example, Figure 1 shows a scenario in which the camera 1 is connected to the data processing unit 5 by means of a communications network 6.

The data processing unit 5 can comprise one or more processors configured to run a software program configured to carry out the steps of the method according to embodiments of the present invention. The data processing unit 5 can be implemented by means of a cloud computing technique, for example within the same communications network 6.

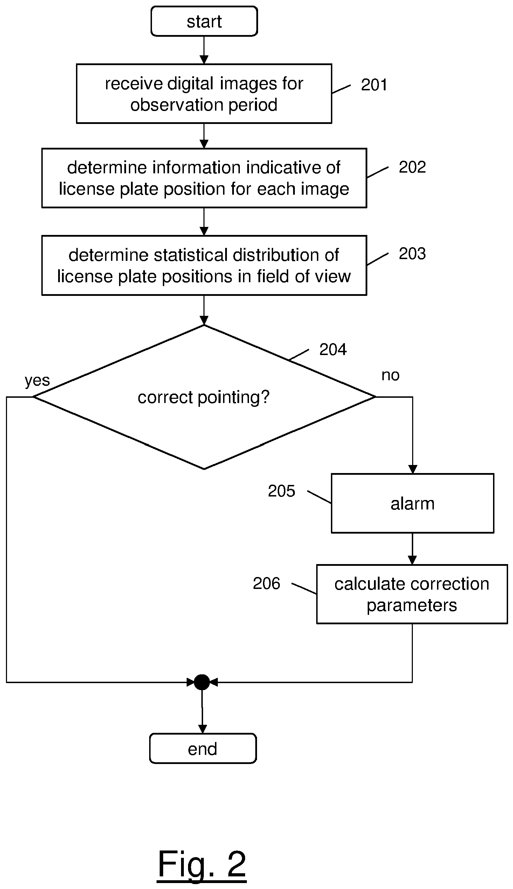

With reference to the flow chart of Figure 2, the operation of the data processing unit 5 according to an embodiment of the present invention will now be described in detail.

At a first step 201, the data processing unit 5 receives a plurality of digital images of passing vehicles acquired by the camera 1. The plurality of digital images received at step 201 can correspond to the set of all the digital images that are acquired by the camera 1 during an observation period of predefined duration T, for example a few hours or a whole day (24 hours). Preferably, the predefined duration T is set to a value such as to allow the acquisition of a minimum number Nmin of digital images during the observation period. The minimum number Nmin is chosen so as to guarantee the statistical relevance of the information used to detect the pointing of the camera 1, and therefore the reliability of the detection. The minimum number Nmin, for example, can be equal to 30, more preferably it is equal to 50.

Then, at step 202, the data processing unit 5 preferably determines, for each digital image received at step 201, an information indicative of the vehicle license plate position within the image. In this way, the data processing unit 5 obtains a plurality of information indicative of the license plate positions in the plurality of images received at step 201. To obtain the information indicative of the vehicle license plate position within each digital image received, the data processing unit 5 can use any known image processing algorithm. The information can also be provided by the camera 1 (or by the processor connected to it), as a result of application of image processing techniques aimed at the identification of the image portion corresponding to the license plate and at the reading of the license plate number.

The information indicative of the vehicle license plate position within each digital image can comprise the Cartesian coordinates (xᵢ,yᵢ) of at least one pixel that represents the license plate in the image (i is the index of the digital images received during the observation period at step 201). The Cartesian coordinates (xᵢ,yᵢ) can be defined with respect to a Cartesian plane (X,Y) which originates in a predefined point of the digital image. Assuming that the image has a square or rectangular shape, the Cartesian plane (X,Y) can originate in a vertex of the image, for example the vertex at the bottom left, so that the Cartesian coordinates (x,y) of all the pixels of the image have positive values.

The at least one pixel that represents the license plate and whose Cartesian coordinates (xᵢ,yᵢ) are determined by the data processing unit 5 (or received from the camera 1) at step 202 can be the pixel that represents the centroid of the license plate, namely the centroid of the substantially rectangular area that represents the license plate in the digital image. Alternatively or additionally, the at least one pixel that represents the license plate and whose coordinates (xᵢ,yᵢ) are determined by the data processing unit 5 (or received from the camera 1, or from the processor connected to it) at step 202 can comprise the pixel that represents one of the vertexes (or several pixels that represent respective vertexes) of the license plate, namely of the substantially rectangular area that represents the license plate in the digital image.

If no license plate is identified in a digital image, the image is preferably excluded from the plurality of images considered for the purposes of determining the pointing of the camera 1.

Then, at a subsequent step 203, the data processing unit 5 preferably determines, based on the plurality of information indicative of the license plate positions in the plurality of received digital images, a statistical distribution of the license plate positions in the field of view of the camera 1.

The statistical distribution of the license plate positions in the field of view of the camera 1 can have different trends, depending on the context in which the camera 1 is located and the use thereof.

For example, if the camera 1 acquires images of vehicles obliged to pass along one single lane, the statistical distribution of the license plate positions will be substantially Gaussian, at least along the X axis. It will therefore have a maximum substantially at the center of the field of view along the X axis (if the pointing of the camera 1 is correct) and two slopes, which can be symmetrical or asymmetrical. On the other hand, if the camera 1 acquires images of vehicles that are not obliged to keep to the same lane (for example in the case of systems for controlling the average travel speed of a stretch of motorway in which lane change is normally permitted), the statistical distribution of the license plate positions could be substantially uniform along the X axis. In this second scenario, if the camera 1 simultaneously frames two nearby lanes, the statistical distribution of the license plate positions could be substantially uniform, with a prevalence of license plates on the right or left side of the field of view, depending on which lane holds more traffic.

Regarding the statistical distribution of the license plate positions along the Y axis, if the trigger system of the camera 1 is correctly synchronized and the pointing of the camera 1 along the Y axis is substantially correct, it will have a substantially Gaussian trend, with peak substantially coinciding with the center of the field of view along the Y axis.

The statistical distribution of the license plate positions in the field of view of the camera 1 can for example be obtained by dividing the rectangle or square that represents the field of view of the camera 1 into a matrix of NxM areas Aⱼₖ (also square or rectangular) having the same size in pixels, in which j and k are the line and column indexes respectively of the matrix, with j=1 ... N and k= 1 ... M. Therefore, for each area Aⱼₖ, the number Nⱼₖ of license plate centroids is calculated whose positions, indicated by the Cartesian coordinates (xᵢ,yᵢ), fall within that area.

The statistical distribution can also be determined for each X and Y axis of the Cartesian plane (X,Y) separately. Specifically, the data processing unit 5 can divide the width of the rectangle or square that represents the field of view of the camera 1 (namely its size along the X axis) into N equal intervals and, for each interval, determine the number of license plate centroids whose x-coordinates xi fall within that interval, thus obtaining a statistical distribution of the x-coordinates of the license plate centroids along the X axis. Analogously, the data processing unit 5 can divide the height of the rectangle or square that represents the field of view of the camera 1 (namely its size along the Y axis) into M equal intervals and, for each interval, determine the number of license plate centroids whose y-coordinates yi fall within that interval, thus obtaining a statistical distribution of the y-coordinates of the license plate centroids along the Y axis.

The data processing unit 5 preferably also provides at least a graph that represents the statistical distribution of the license plate positions determined at step 203. Said graph can be shown to an operator in charge of the traffic control system to which the camera 1 belongs, for example on a screen 5a cooperating with the data processing unit 5 (see Figure 1).

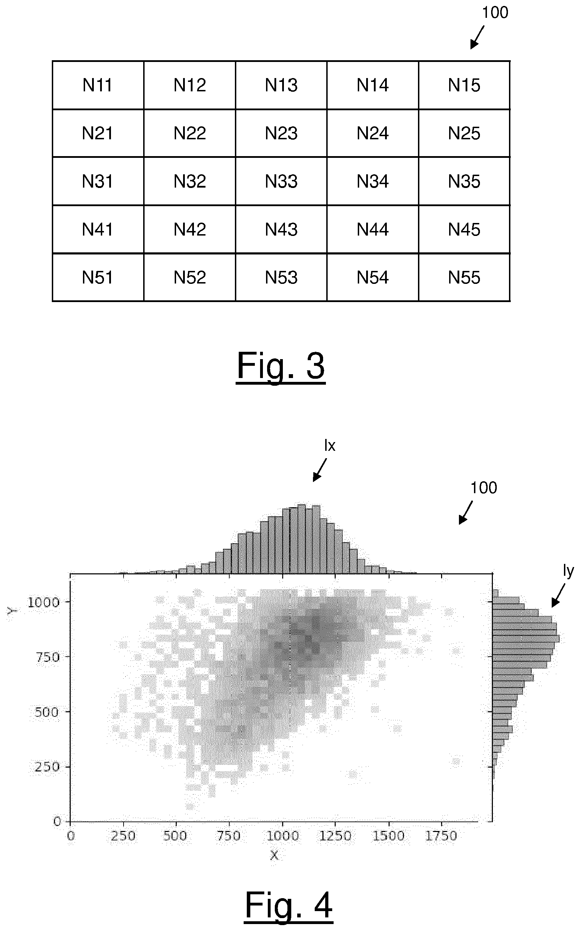

Figure 3 shows a first example of graph that represents the statistical distribution of the license plate positions determined at step 203. In this example graph, the field of view 100 of the camera 1 is rectangular and has been divided into a matrix of 5x5 rectangular areas Aⱼₖ (namely N=5 and M=5). Within each area Aⱼₖ, the corresponding number of centroids Nⱼₖ is indicated in text form.

Figure 4 shows a second example of a graph that represents the statistical distribution of the license plate positions determined at step 203. In this second example graph, the field of view 100 of the camera 1 has been divided into a matrix of square areas Aⱼₖ each having a size of 10 pixel x 10 pixel. The graph of Figure 4 therefore provides a representation of the statistical distribution of the license plate positions with a much greater resolution than that of Figure 3. In this case, since the number of areas is much greater than in the graph of Figure 3 (and since the areas are therefore much smaller), instead of a textual representation of the numbers of centroids Nⱼₖ a symbolic representation can be used, for example a color scale. The darker the color of an area Aⱼₖ, the greater the number Nⱼₖ of centroids that fall within that area.

To improve the interpretability of the graph of Figure 3 or the graph of Figure 4, a specific digital image acquired by the camera 1 can be superimposed on it, in which a vehicle passing along the carriageway and its license plate can be seen.

Alternatively or additionally to the graph of Figure 3 or Figure 4, two histograms Ix, ly can be shown of the statistical distributions of x and y coordinates of the license plate centroids determined as described above. By way of example, Figure 4 shows the two histograms Ix, ly directly along the sides of the rectangle that represents the field of view 100 of the camera 1. The two histograms Ix, ly advantageously provide additional indications for the operator. For example the histograms Ix, ly in the exemplary graph of Figure 4 show that the license plate centroids have a substantially Gaussian distribution with asymmetrical slopes along both the X and Y axes. They furthermore have an average position substantially centered along the X axis (namely along the horizontal direction), while they have a slightly high average position (namely above the center of the field of view of the camera 1) along the Y axis (namely along the vertical direction). The two histograms Ix, ly also allow the operator to evaluate the variance in the distribution of x and y coordinates of the license plate centroids along the respective axes.

Then, at a subsequent step 204, the data processing unit 5 preferably determines pointing of the camera 1 based on the statistical distribution of the license plate positions in the field of view 100 of the camera 1 determined at step 203.

According to an embodiment, pointing of the camera 1 can be determined based on a comparison between the statistical distribution of the license plate positions in the field of view of the camera 1 and a predetermined area of the field of view 100. If the statistical distribution of the license plate positions in the field of view 100 of the camera 1 has a maximum that falls within the predetermined area, the data processing unit 5 determines that the pointing of the camera 1 is correct. On the other hand, if the statistical distribution of the license plate positions in the field of view 100 of the camera 1 has a maximum that does not fall within the predetermined area, the data processing unit 5 determines that the pointing of the camera 1 is not correct.

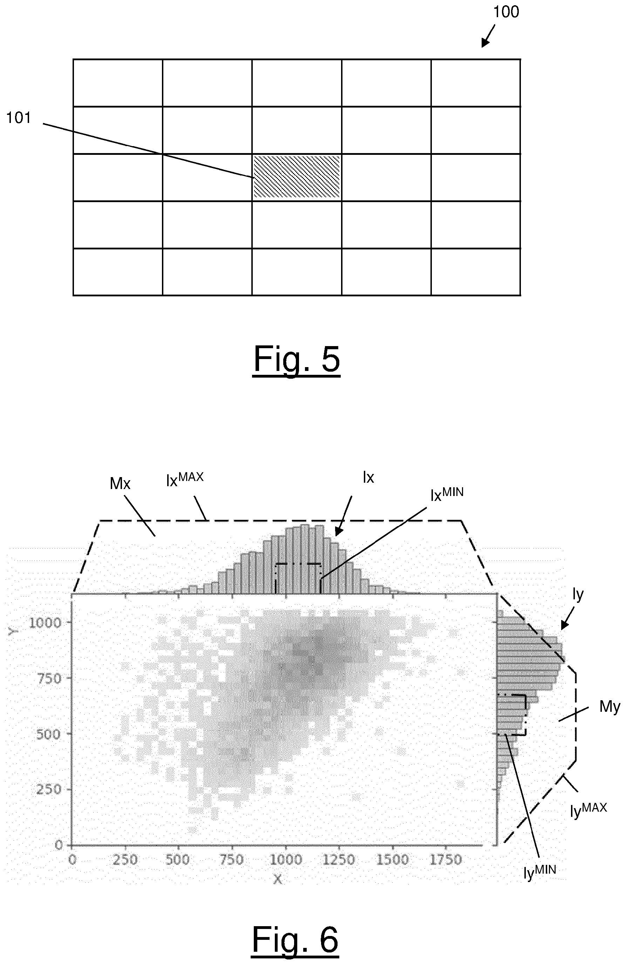

The predetermined area is preferably a central area of the field of view 100 of the camera 1. For example, if the data processing unit 5 has divided the rectangle that represents the field of view 100 of the camera 1 into a matrix of NxM areas Aⱼₖ as described above, the predetermined area can comprise one or more areas Aⱼₖ of the most central ones of the matrix. For example, the predetermined area can coincide with the central area A_{j*k*} of the matrix, with j*=(N+1)/2 and k*=(M+1)/2 (if N and M are odd). With reference for example to the graph of Figure 5, the predetermined area (indicated by the reference number 101) can coincide with the central area A₃₃, since j*=(5+1)/2=3 and k*=(5+1)/2=3. The predetermined area 101 could also comprise a sub-matrix of areas Aⱼₖ centered in the central area A_{j*k*} of the matrix. In general, preferably, the predetermined area 101 has a width and a height equal to approximately 1/3 of the width and the height of the field of view 100.

Then, if the number N_{j*k*} of centroids that fall within the predetermined area 101 is the maximum of all the numbers Nⱼₖ calculated at step 203 for the areas Aⱼₖ, the data processing unit 5 preferably concludes that the pointing of the camera 1 is correct. On the other hand, if the number N_{j*k*} of centroids that fall within the predetermined area 101 is not the maximum of all the numbers Nⱼₖ calculated at step 203 for all the areas Aⱼₖ (namely there is an area different from A_{j*k*} for which the number of centroids is greater than N_{j*k*}), the data processing unit 5 preferably concludes that the pointing of the camera 1 is not correct.

According to another embodiment, the pointing of the camera 1 can be determined based on a comparison between the statistical distribution of the license plate positions in the field of view 100 of the camera 1 as determined at step 203 and at least one reference statistical distribution of the license plate positions in the field of view of the camera 1. This second embodiment is particularly advantageous when the vehicle license plates have a known statistical distribution within the field of view of the camera 1 at least along one of the two axes X and Y, as described above.

According to this embodiment, for example, for each X and Y axis, a respective upper reference or threshold statistical distribution lx^{MAX}, ly^{MAX} can be defined. The data processing unit 5 preferably compares the statistical distribution lx of the x-coordinates of the license plate positions along the X axis with the upper threshold statistical distribution lx^{MAX}, and compares the statistical distribution ly of the y-coordinates of the license plate positions along the Y axis with the upper threshold statistical distribution ly^{MAX}. If, along an axis, the statistical distribution is entirely below the respective upper threshold statistical distribution, the data processing unit 5 determines that the pointing of the camera 1 along that axis is substantially correct. If, on the other hand, along an axis the statistical distribution exceeds the respective upper threshold statistical distribution, the data processing unit 5 determines that the pointing of the camera 1 along that axis is not correct.

According to an advantageous variation, along at least one of the two axes, in addition to the upper threshold statistical distribution lx^{MAX} ly^{MAX} a lower threshold statistical distribution lx^{MIN}, ly^{MIN} can also be defined. This, together with the respective upper threshold statistical distribution lx^{MAX}, ly^{MAX}, substantially defines a reference mask, with which the data processing unit 5 compares the statistical distribution determined at step 203. Specifically, if along an axis the statistical distribution is entirely within the reference mask defined by the lower and upper threshold statistical distributions along the same axis, the data processing unit 5 determines that the pointing of the camera 1 along that axis is substantially correct. If, on the other hand, along an axis the statistical distribution is outside the bottom and/or the top of the reference mask defined by the lower and upper threshold statistical distributions along the same axis, the data processing unit 5 determines that the pointing of the camera 1 along that axis is not correct.

For example, Figure 6 again shows the graph of Figure 4 already described above, with the histograms Ix and ly that represent the statistical distributions of the x and y coordinates respectively of the license plate centroids along the X and Y axes of the field of view 100. Figure 6 also shows an upper threshold statistical distribution lx^{MAX} (dashed line) and a lower threshold statistical distribution lx^{MIN} (dash-dot line) by way of example, that define a reference mask Mx along the X axis; and an upper threshold statistical distribution ly^{MAX} (dashed line) and a lower threshold statistical distribution ly^{MIN} (dash-dot line) by way of example, which define a reference mask My along the Y axis. By way of non-limiting example, the upper threshold statistical distributions lx^{MAX} and ly^{MAX} have a trapezoidal trend, while the lower threshold statistical distributions have a step-wise trend lx^{MIN} and ly^{MIN}. This is not limiting, since the upper and lower threshold statistical distributions could have any step-wise or continuous trend, with straight sections and/or curved sections. For example, using step functions with three or more levels, it is possible to appropriately shape the reference masks according to the features of the camera 1 and/or the desired performance.

From the graph of Figure 6, it is possible for example to observe that the histogram Ix falls completely within the reference mask Mx, indicating a substantially correct pointing of the camera 1 along the X axis. The histogram ly, on the other hand, is outside the reference mask My both on its upper side and on its lower side, indicating an incorrect pointing of the camera 1 along the Y axis.

If the data processing unit 5 at step 204 determines that the pointing of the camera 1 is not correct (for example, via any one of the techniques described above with reference to Figures 5 or 6), the data processing unit 5 can generate an alarm (visual and/or acoustic), warning the operator that the pointing of the camera 1 appears to be incorrect (step 205). The operator can thus initiate a manual checking procedure of the pointing which can entail, for example, a field inspection during which the pointing of the camera 1 will be checked and if necessary adjusted, appropriately modifying the orientation of the camera 1.

It should be noted that at step 205, different types of alarms can be generated, according to the extent of the detected shift from the correct pointing.

For example, with reference to the method for determining the pointing described above and shown in Figure 5, in addition to the predetermined area 101, a second area can be defined that surrounds it. If for example the predetermined area 101 consists of one or more areas Aⱼₖ of the most central ones of the matrix NxM, the second area can be formed, for example, of the "crown" of areas Aⱼₖ adjacent to the predetermined area 101. In this case, if the maximum number Nⱼₖ of centroids of those determined at step 203 falls outside the predetermined area 101 but inside the second area, a first alarm type is generated (critical). If on the other hand the maximum number Nⱼₖ of centroids of those determined at step 203 also falls outside the second area (which means that the statistical distribution of the license plate positions is concentrated in the more peripheral part of the field of view 100 of the camera 1), then a second alarm type (warning) is generated.

Optionally, the data processing unit 5 can calculate one or more pointing correction parameters of the camera 1 (206), which are provided to the operator as an indication for manual adjustment of orientation of the camera 1. Alternatively, if the camera 1 is provided with actuators, the correction parameters can be provided by the data processing unit 5 to the actuators (for example via the communications network 6), which automatically adjust the pointing of the camera 1.

The steps of the method described above can be cyclically repeated, so as to perform a periodic detection of the pointing of the camera 1. For example, the steps of the method can be repeated whenever an observation period T terminates.

Advantageously, the method described above allows the pointing of the camera 1 to be automatically detected. Determination of the plurality of information indicative of the license plate positions in the plurality of digital images acquired by the camera 1 and the processing thereof to determine the statistical distribution in the field of view 100 of the camera 1 are operations that can be implemented by a software which, in performing them, is capable of automatically detecting the pointing of the camera 1.

These operations do not require an excessive computational load, and can therefore be performed for a large number of devices (thousands) by the computers commonly used in traffic control centers. The method is therefore advantageously applicable to traffic control systems comprising many digital image acquisition devices.

Besides, the method according to embodiments of the present invention is reliable. The method is indeed based on information indicative of the license plate positions in a plurality of images relative to different vehicles passing through, and not on the image or images relative to one single vehicle. Such different vehicles (for example the vehicles 4a, 4b and 4c shown in Figure 1) can have different sizes and can be in different positions along the carriageway when their digital images are acquired by the camera 1. This means that, for a same orientation of the camera 1, the license plate position in the field of view 100 of the camera 1 is subject to a certain variability. However, considering a large number of vehicles, this variability is averaged and the information acquired assumes statistical relevance, hence their distribution becomes substantially indicative of the pointing of the camera 1.

Moreover, detection of the pointing of the camera 1 is based directly on the license plate positions in the acquired digital images, and not indirectly on other data (for example, the reading performance of the license plates of the camera 1), which could be affected also by other phenomena that have nothing to do with pointing of the camera 1. Also for this reason, the method according to embodiments of the present invention is particularly reliable.

Furthermore, the method is advantageously capable of detecting the occurrence of pointing problems of the camera 1 substantially in real time, well before they worsen to the point of entailing a deterioration in the license plate reading performances. For example, if the camera 1 is knocked and slightly rotated, the detection method of the present invention is capable of detecting the pointing variation after a few vehicle transits, even when the variation is so slight that it does not (yet) have any detectable impact on the performance of the camera 1 in reading the license plates.

According to other embodiments, in addition to detecting the pointing of the camera 1, the data processing unit 5 can be configured to provide additional information concerning operation of the camera 1.

In particular, the data processing unit 5 can be configured to determine a statistical distribution of the license plate areas in the plurality of digital images received during the same observation period. Said analysis is advantageous because the image processing techniques that perform the automatic recognition of the alphanumeric characters of the license plate number can function correctly only when the area of the license plate in the image is not below a certain minimum threshold (vehicle too far away) and not above a certain maximum threshold (vehicle too close).

To obtain this statistical distribution, the data processing unit 5 preferably determines, in each digital image received during the observation period, the area of the portion of digital image corresponding to the license plate (for example expressed in number of pixels). Therefore, the data processing unit 5 preferably determines a statistical distribution of the license plate areas. Said statistical distribution can be obtained by defining a plurality of adjoining numeric intervals of values of the license plate area, and determining for each interval the number of digital images received in which the license plate has an area that falls within the interval.

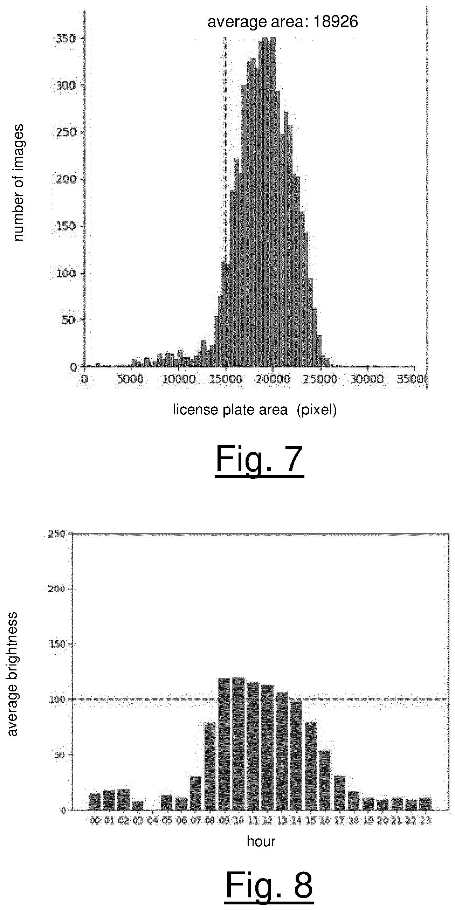

The data processing unit 5 can also provide a graph that represents the statistical distribution of the license plate areas. Said graph can be used to generate possible alarms, as will be described in further detail below. Optionally, it can be shown to the operator in charge of the traffic control system to which the camera 1 belongs, by means of the screen 5a cooperating with the data processing unit 5. Figure 7 shows an example of graph (in particular, a histogram) that represents the statistical distribution of the license plate areas. The representation of the statistical distribution of the license plate areas in the form of histograms is not limiting, since other graph forms and/or text descriptions (for example, indication of the average value) could be used. From the graph of Figure 7 the operator can obtain information such as the average license plate area and the variance of the license plate area in the considered observation period. Optionally, in the graph of Figure 7 a reference average license plate area can also be indicated (dashed vertical line), namely the one that allows optimal functioning of the algorithms for reading the license plate number. In the graph of Figure 7 it can be seen that the reference average area is smaller than the actual average area. In the graph, threshold values can also be indicated such that, if the average area is smaller or larger than said values, alarms are generated, as will be described in further detail below.

Alternatively or additionally, the data processing unit 5 can be configured to determine the time variation of the average brightness of the plurality of digital images during the observation period. Said analysis advantageously establishes whether the camera 1 is subject to dazzling at one or more moments of the observation period, a condition which - analogously to incorrect pointing - could affect its license plate reading performance.

To carry out this analysis, the data processing unit 5 preferably determines the brightness of each digital image received during the observation period. This operation can be performed by applying known image processing techniques. For example, in the case of grayscale images in which the color of each pixel is represented by a numeric value between 0 and 255, the brightness of each image can be calculated as a sum of the numeric values of all the pixels of the image, divided by the total number of pixels of the image. Then, the data processing unit 5 preferably divides the observation period into a number of time intervals of equal duration (for example 1 hour, if the duration T of the observation period is 24 hours) and for each time interval calculates the average brightness of the digital images acquired by the camera 1 during that time interval. In this way, the data processing unit 5 obtains the time variation of the average brightness of the plurality of digital images acquired by the camera 1 during the observation period.

The data processing unit 5 can also provide a graph that represents the time variation of the average brightness of the plurality of digital images acquired by the camera 1 during the observation period. Also said graph can be shown to the operator in charge of the traffic control system to which the camera 1 belongs, by means of the screen 5a cooperating with the data processing unit 5. Figure 8 shows an example of a graph (in particular, a histogram) that represents the time variation of the average brightness of the plurality of digital images acquired by the camera 1 during the observation period. Said representation is not limiting, since other graph forms could be used. From the graph of Figure 8 it can be seen that the average brightness is greater in the middle of the day and is reduced at night. There are no abnormal peaks that indicate dazzling conditions, for example at times of the day corresponding to sunrise or sunset.

Alternatively or additionally, the data processing unit 5 can be configured to determine a statistical distribution of the number of images acquired for a same vehicle, in which the license plate number has been read. As described above, indeed, the camera 1 acquires several digital images relative to the same passing vehicle and applies to each of them the image processing algorithm for recognizing the license plate in the image and reading the license plate number (ideally, the license plate number read should be the same in all the images relative to the same vehicle). If the trigger system of the camera 1 is correctly synchronized, reading of the license plate number should be performed on a certain number of images, typically 9-10 images. A smaller number indicates that the trigger system of the camera 1 is ahead or behind with respect to the condition of optimal synchronism.

To perform this analysis, the data processing unit 5 preferably determines, for each vehicle detected by the camera 1, the number of digital images acquired from which the vehicle license plate number has been read. This data is generally stored by the camera 1 (or by the processor connected to it), and can therefore be retrieved by the data processing unit 5. The data processing unit 5 preferably then determines a statistical distribution of the number of images acquired for the same vehicle, in which the license plate number has been read. Said statistical distribution can be obtained by determining, for each value of the number of images (for example between 1 and 10), the number of vehicles whose license plate number has been read from that number of images.

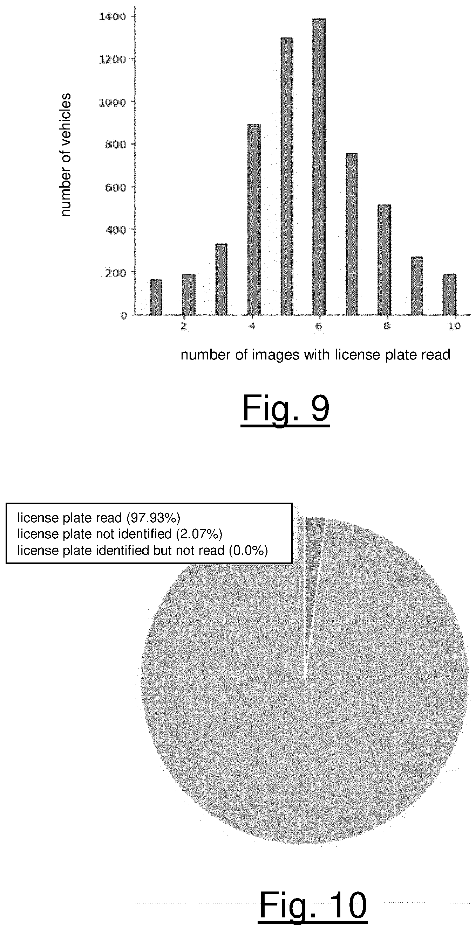

The data processing unit 5 can also provide a graph that represents said statistical distribution. Also this graph can be used to generate alarms and/or be shown to the operator in charge of the traffic control system to which the camera 1 belongs, by means of the screen 5a cooperating with the data processing unit 5. Figure 9 shows an example of graph (in particular, a histogram) that represents the statistical distribution of the number of images acquired for a same vehicle, in which the license plate number has been read. This representation is not limiting, since other graph forms could be used. From the graph of Figure 9 the operator for example can observe that for the majority of vehicles, the license plate number has been read in 6 images, which indicates substantially correct functioning of the trigger system of the camera 1.

Alternatively or additionally, the data processing unit 5 can be configured to determine, in the observation period, the percentage of digital images from which the license plate number has been read, the percentage of digital images in which the license plate has been identified but the license plate number has not been read, and the percentage of digital images in which the license plate has not been identified (for example because the vehicle license plate was no longer in the field of view of the camera 1). This data is generally provided by the camera 1, or by the processor connected to it. This analysis is advantageous because it enables the data processing unit 5 to detect any problems of the camera 1 other than pointing problems, for example deterioration of the infrared illuminators of the camera 1 or the accumulation of dirt on the glass of the camera 1. Furthermore, advantageously, this analysis allows determining the statistical validity of detection of the pointing of the camera 1 as described above. Indeed, if a significant percentage of the digital images acquired in an observation period has not provided any result in terms of reading of the license plate number, the statistical distribution of the license plate positions in the field of view of the camera 1 obtained based on the digital images received during that observation period could be distorted, and therefore provide an unreliable detection of the pointing.

The data processing unit 5 can also provide a graph that represents the above-mentioned percentages. Also this graph can be used to generate alarms and/or be shown to the operator in charge of the traffic control system to which the camera 1 belongs, by means of the screen 5a cooperating with the data processing unit 5. Figure 10 shows an example of graph (in particular, an areogram) that represents the three percentages of images in the observation period: those from which the license plate number has been read, those in which the license plate has been identified but the license plate number has not been read, and those in which the license plate has not been identified. This representation is not limiting, since other graph forms could be used. For example, alternatively to the areogram, a histogram could be provided indicating the three above-mentioned percentages as the time varies, within the observation period T. From the graph of Figure 10 the operator can observe, for example, that for the majority (97.93%) of the images received in the observation period, the license plate number has been successfully read, confirming correct operation of the camera 1 and reliable detection of the pointing of the camera 1 based on the statistical distribution of the license plate positions obtained based on the digital images received during that observation period.

Two or more of the above analyses can be combined with one another.

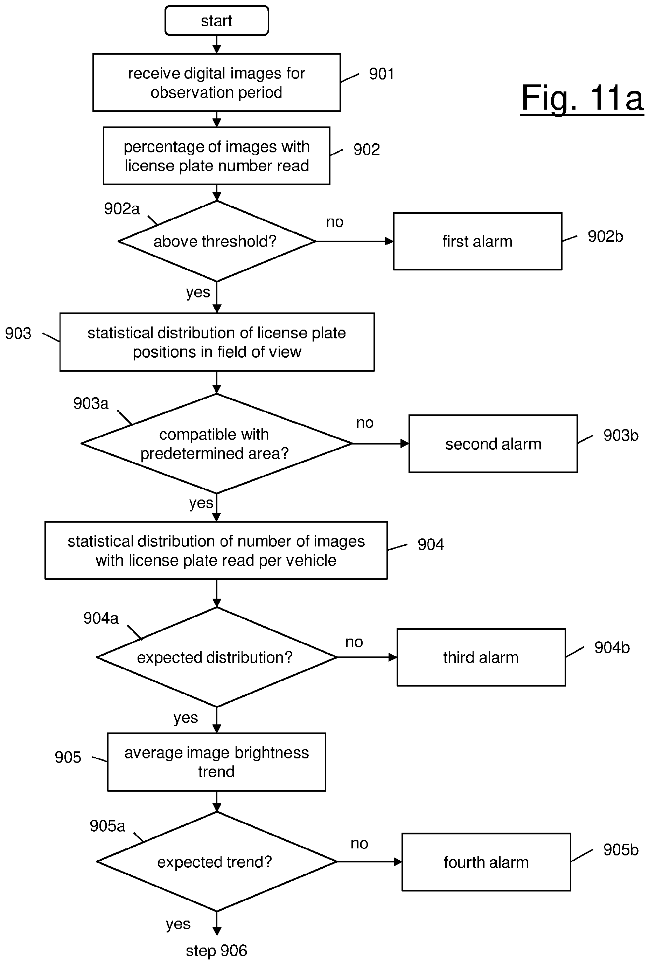

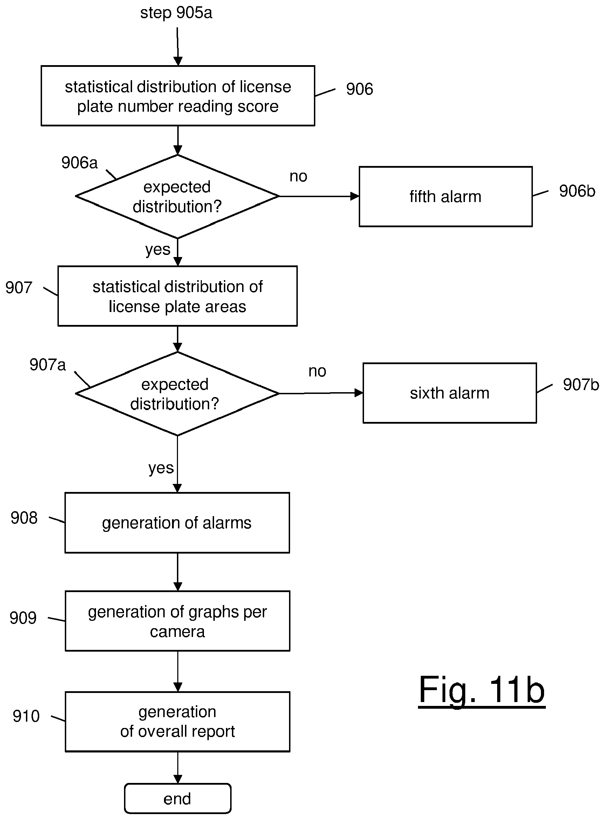

For example, with reference to the flow chart of Figures 11a-11b, after receiving the digital images relative to a certain observation period (step 901), the data processing unit 5 can firstly determine the percentage of images from which the license plate number has been read, as described above with reference to Figure 10 (step 902). If said percentage is not above a certain predetermined threshold (for example 95%) (step 902a), the data processing unit 5 can generate a first alarm (step 902b). If on the other hand the percentage is above the predetermined threshold, the data processing unit 5 does not generate the first alarm. Optionally, the threshold can be variable during the observation period T.

The data processing unit 5 then preferably determines the statistical distribution of the license plate positions in the field of view 100 of the camera 1, for example as described above with reference to the flow chart of Figure 2 (step 903). If said statistical distribution is not compatible with the predetermined area of the field of view 100 of the camera 1 (step 903a), the data processing unit 5 can generate a second alarm (step 903b) indicating that the detected pointing of the camera 1 may not be correct. If on the other hand the statistical distribution is compatible with the predetermined area of the field of view 100 of the camera 1, the data processing unit 5 does not generate the second alarm.

The data processing unit 5 can then determine the statistical distribution of the number of images acquired for a same vehicle, in which the license plate number has been read, for example as described above with reference to Figure 9 (step 904). If said statistical distribution is not as expected (step 904a), the data processing unit 5 can generate a third alarm (step 904b). If on the other hand the statistical distribution is as expected, the data processing unit 5 does not generate the third alarm.

The data processing unit 5 can then determine the average brightness trend of the plurality of digital images during the observation period, for example as described above with reference to Figure 8 (step 905). If said trend is not as expected (for example, abnormal peaks are present) (step 905a), the data processing unit 5 can generate a fourth alarm (step 905b). If on the other hand the trend is as expected, the data processing unit 5 does not generate the fourth alarm.

The data processing unit 5 can then determine a statistical distribution of the license plate number reading accuracy score (step 906). Said information can be provided directly by the camera 1, or by the processor connected to it. If said statistical distribution is not as expected (step 906a), the data processing unit 5 can generate a fifth alarm (step 906b). If on the other hand the statistical distribution is as expected, the data processing unit 5 does not generate the fifth alarm.

The data processing unit 5 then preferably determines a statistical distribution of the license plate area in the images acquired during the observation period, for example as described above with reference to Figure 7 (step 907). If said statistical distribution is not as expected (step 907a), the data processing unit 5 can generate a sixth alarm (step 907b). If on the other hand the statistical distribution is as expected, the data processing unit 5 does not generate the sixth alarm.

The data processing unit 5 then preferably collects the alarms relative to the camera 1 generated in the preceding steps and notifies them to the operator (step 908).

For each type of problem found during the preceding steps, two alarm levels can be provided, as described above for the detection of pointing problems, namely: a first warning level that indicates a slight variance from the expected distribution or trend, and a second critical level that indicates a more significant variance from the expected distribution or trend. The discrimination threshold between the two alarm types can be configured by the operator.

The data processing unit 5 can also present to the operator graphs analogous to those of Figures 3-8, relative to the operation of the camera 1 (step 909), for example by means of the screen 5a. Together with the graphs, the values outside the threshold that have determined the generation of corresponding alarms can also be expressly displayed. These graphs can be automatically shown by the data processing unit 5 in the event of an alarm so as to allow the operator to carry out a first analysis on operation of the camera 1. Alternatively or additionally, the above-mentioned graphs can be displayed upon the initiative of the operator, for example in the case of doubts on the operation of the camera 1.

Assuming that the data processing unit 5 performs the above analysis on all the cameras of the traffic control system to which the camera 1 belongs or on a part thereof, the data processing unit 5 can compile an overall report which summarizes the results obtained for all the considered cameras of the traffic control system (step 910).

This report could be in the form of a table, for example. Each line of the table could correspond to a respective camera, and could comprise the most significant values obtained from the above analysis (for example, the values outside the threshold). Based on the values contained in this report, the operator can decide, for example, to modify the thresholds on the basis of which it is established whether to generate an alarm and the alarm type (warning or critical) to be generated.

## Claims

1. A method for detecting the pointing of a digital imaging device (1) for recognizing vehicle license plates, the method comprising:
(a) receiving (201) a plurality of digital images of a plurality of passing vehicles (4a, 4b, 4c) provided by the digital imaging device (1);
(b) for each received digital image, determining (202) an information indicative of the position of a license plate within the received digital image, so as to obtain a plurality of information indicative of license plate positions in the plurality of received digital images;
(c) based on the plurality of information indicative of license plate positions in the plurality of received digital images, determining (203) a statistical distribution of license plate positions in a field of view (100) of the digital imaging device (1); and
(d) detecting (204) the pointing of the digital imaging device (1) based on the statistical distribution of license plate positions in the field of view (100) of the digital imaging device (1).

2. The method according to claim 1, wherein the plurality of digital images received at step a) is part of the set of digital images acquired by the digital imaging device (1) during an observation period having a predefined duration T.

3. The method according to claim 1 or 2, wherein the plurality of digital images received at step a) comprises at least 30 digital images provided by the digital imaging device (1).

4. The method according to any of the preceding claims, wherein:
- at step b), said information indicative of the position of a license plate within the received digital image is an information indicative of a two-dimensional position of a license plate within the received digital image, and said plurality of information indicative of license plate positions in the plurality of received digital images is a plurality of information indicative of license plate two-dimensional positions in the plurality of received digital images; and
- at step c), said statistical distribution of license plate positions in a field of view (100) of the digital imaging device (1) is a statistical distribution of two-dimensional license plate positions in a field of view (100) of the digital imaging device (1).

5. The method according to any one of the preceding claims, wherein at step b) the information indicative of the position of the license plate within the received digital image comprises Cartesian coordinates of at least one pixel which represents at least one point of the license plate in the received digital image.

6. The method according to claim 4, wherein at step b) the at least one pixel which represents at least one point of the license plate in the received digital image is a pixel that represents a centroid of the license plate in the received digital image.

7. The method according to any one of the preceding claims, wherein step c) comprises dividing the field of view (100) of the digital imaging device (1) into a matrix of NxM areas and, for each area, determining the number of digital images in which the position of the license plate, as indicated by the information indicative of the position of the license plate within the digital image determined at step b), falls within the area.

8. The method according to any one of the preceding claims, wherein step c) comprises dividing each dimension of the field of view (100) of the digital imaging device (1) into a number of intervals and, for each interval, determining the number of digital images in which the position of the license plate in that dimension, as indicated by the information indicative of the position of the license plate within the digital image determined at step b), falls within the interval.

9. The method according to any one of the preceding claims, wherein step d) comprises comparing the statistical distribution of license plate positions in the field of view (100) of the digital imaging device (1) with a reference area (101) of the field of view (100), and determining that the pointing of the digital imaging device (1) is correct if the statistical distribution has a maximum that falls within the reference area (101).

10. The method according to claim 9, wherein said reference area is a central area of the field of view (100).

11. The method according to any one of the preceding claims, wherein step d) comprises comparing the statistical distribution of license plate positions in the field of view (100) of the digital imaging device (1) with at least one reference statistical distribution (lx^{MAX}, ly^{MAX}, lx^{MIN}, ly^{MIN}) of the license plate positions in the field of view (100) of the digital imaging device (1), and determining that the pointing of the digital imaging device (1) is correct if the statistical distribution falls within a reference mask (Mx, My) defined by at least one reference statistical distribution (lx^{MAX}, ly^{MAX}, lx^{MIN}, ly^{MIN}).

12. The method according to any one of the preceding claims, also comprising, if at step d) it is detected that the pointing of the digital imaging device (1) is not correct, generating at least one pointing correction parameter of the digital imaging device (1).

13. The method according to any one of the preceding claims, also comprising determining a percentage of digital images provided by the digital imaging device (1) at step a) from which a license plate number was read, and performing steps b)-d) if said percentage is above a predetermined threshold.

14. The method according to any one of the preceding claims, also comprising one or more of the following steps:
- determining a statistical distribution of the areas of the license plates in the plurality of digital images received at step a);
- determining a time variation of an average brightness of the plurality of digital images received at step a);
- determining a statistical distribution of the number of digital images provided by the digital imaging device (1) at step a) for a same vehicle, from which a reading of the license plate number has been performed; and
- determining the percentage of digital images provided by the digital imaging device (1) at step a) in which a license plate has been detected but no license plate number has been read, and/or the percentage of digital images provided by the digital imaging device (1) at step a) in which no license plate has been identified.

15. A traffic control system (1000) comprising a digital imaging device (1) for recognizing vehicle license plates and a data processing unit (5) connected to the digital imaging device (1) and configured to:
(a) receive (201) a plurality of digital images of a plurality of passing vehicles (4a, 4b, 4c) provided by the digital imaging device (1);
(b) for each received digital image, determine (202) an information indicative of the position of a license plate within the received digital image, so as to obtain a plurality of information indicative of license plate positions in the plurality of received digital images;
(c) based on the plurality of information indicative of license plate positions in the plurality of received digital images, determine (203) a statistical distribution of license plate positions in a field of view (100) of the digital imaging device (1); and
(d) detect (204) the pointing of the digital imaging device (1) based on the statistical distribution of license plate positions in the field of view (100) of the digital imaging device (1).
